# EUROPÄISCHE PATENTSCHRIFT

(11) **EP 1 724 243 B1**
(45) Veröffentlichungstag und Bekanntmachung des Hinweises auf die Patenterteilung: **10.12.2008**
(21) Anmeldenummer: 06113559.6
(22) Anmeldetag: 05.05.2006
(51) Int. Cl.: C03C 17/22, C03C 17/00, C03C 17/245, C03B 17/04, C03B 15/14

(54) **Verfahren und Vorrichtung zur Herstellung von innenvergüteten Glasrohren**
Method and apparatus for the production of glass tubes with inner coating
Procédé et dispositif pour la fabrication de tube en verre avec de la couche interieure

(30) Priorität: 18.05.2005 DE 102005023582
(43) Veröffentlichungstag der Anmeldung: 22.11.2006
(73) Patentinhaber: Schott AG, 55122 Mainz (DE)
(72) Erfinder: Dick, Erhard, 95701, Pechbrunn (DE); Fischer, Erich, 95666, Mitterteich (DE); Fuchs, Roland, 95666, Leonberg (DE); Hummer, Alexander, 95659, Arzberg (DE); Tratzky, Stephan, 92660, Neustadt (DE)
(74) Vertreter: 2K Patentanwälte Kewitz & Kollegen

(56) Entgegenhaltungen:
- EP-A- 0 501 562
- DE-A1- 3 638 426
- DE-A1- 3 801 111
- GB-A- 1 075 759
- GB-A- 2 131 792
- US-A- 4 228 206
- US-A- 5 462 596
- US-A1- 2004 237 590
- MORSE T F ET AL: "Aerosol transport for optical fiber core doping: a new technique for glass formation" JOURNAL OF AEROSOL SCIENCE UK, Bd. 22, Nr. 5, 1991, Seiten 657-666, XP000612694 ISSN: 0021-8502

## Beschreibung

### Gebiet der Erfindung

Die vorliegende Erfindung betrifft allgemein die Herstellung von Glasrohren mit einer innenvergüteten, insbesondere chemisch oder physikalisch modifizierten Innenoberfläche, mit Hilfe eines kontinuierlichen oder quasi-kontinuierlichen Glasziehverfahrens.

### Hintergrund der Erfindung

Technische Anwendungen von Glas, beispielsweise als Ausgangsmaterial für Primärpackmittel in der Pharmaindustrie, verlangen zunehmend nach hohlen Glasformkörpern, deren Innenoberfläche möglichst reaktionsträge ist, beispielsweise möglichst wenig Ionen in eine aufzubewahrende Substanz abgibt oder mit einer von dem Glasformkörper aufbewahrten Substanz reagiert. Gläser mit reaktionsträgen Oberflächen können durch geeignete Wahl der Glaszusammensetzung bereitgestellt werden. Die Herstellung solcher Gläser ist jedoch häufig vergleichsweise kostenaufwendig. Ferner genügen solche Gläser häufig nicht den geforderten Spezifikationen, insbesondere hinsichtlich der Umformbarkeit zu hohlen Glasformkörpern bei möglichst niedrigen Temperaturen.

Alternativ ist aus dem Stand der Technik bekannt, die Innenoberfläche von als Halbfabrikat für die Ausformung von hohlen Glasformkörpern dienenden Glasrohren chemisch zu modifizieren, beispielsweise durch gezielte Natriumverarmung der Glasoberfläche, oder physikalisch zu modifizieren, beispielsweise durch Aufbringen einer Beschichtung auf der Innenoberfläche mit einer geeigneten Reaktionsträgheit. Grundsätzlich kann eine solche chemische oder physikalische Modifikation der Innenoberfläche auch an dem bereits umgeformten hohlen Glasformkörper vorgenommen werden. Solche Verfahren unterliegen jedoch zahlreichen Beschränkungen. So wird der Aufwand zur geeigneten Modifikation der Innenoberfläche auf den Hersteller des hohlen Glasformkörpers verlagert, was jedoch häufig aus Kosten- und Zweckmäßigkeitsgründen unerwünscht ist. Wünschenswerter ist es bei vielen Anwendungen, hohle Glasformkörper durch Umformen eines Glasrohrs mit einer geeignet reaktionsträgen Innenoberfläche auszubilden. Zwar wird beim Umformen des Glasrohrs zu dem hohlen Glasformkörper die Innenoberfläche unter Umständen wieder reaktiver, doch kann die erzielbare Reaktionsfähigkeit der Innenoberfläche solchermaßen hergestellter hohler Glasformkörper dennoch für die gewünschte technische Anwendung ausreichend sein. Die vorliegende Erfindung widmet sich somit einer kostengünstigen Herstellung von Glasrohren mit geeignet modifizierten Innenoberflächen.

Bei der Herstellung von Glasrohren unterscheidet man prinzipiell zwischen kontinuierlichen bzw. quasi-kontinuierlichen Herstellungsverfahren und diskontinuierlichen Herstellungsverfahren. Wegen der zumeist grundlegend anderen Verfahrensparameter sind bei diskontinuierlichen Herstellungsverfahren angewendete Prinzipien nicht oder jedenfalls nicht ohne Weiteres auf kontinuierliche Herstellungsverfahren übertragbar, so dass diese dem Fachmann nicht als Anregung zur Verbesserung von kontinuierlichen bzw. quasi-kontinuierlichen Herstellungsverfahren dienen werden.

US 4,175,941 und US 4,228,206 offenbaren ein kontinuierliches Verfahren zur Herstellung von innenbeschichteten Glasrohren nach dem Vello-Verfahren (vgl. US 2,009,793). Bei diesem Verfahren wird das Glasrohr durch Ziehen einer Glasschmelze über einen Formkörper zu einem Schlauch aus erweichtem Glas (auch Ziehzwiebel genannt) und durch Heißformgebung zu dem Glasrohr ausgebildet. Das Innenprofil des Glasrohrs wird durch das Profil des Formkörpers sowie durch weitere Verfahrensparameter, wie beispielsweise Temperatur bzw. Viskosität der Glasschmelze, Öffnungsweite des Ringspalts am Auslass der Glasschmelzenwanne sowie Glasabzuggeschwindigkeit, in der bekannten Weise vorgegeben. Zur Innenbeschichtung wird in den auf Temperaturen oberhalb der Erweichungstemperatur des Glases befindlichen Schlauch eine wässrige Lösung eingebracht, die Zinnchlorid und Fluorwasserstoff enthält. Durch Reaktion der Lösung auf der heißen Innenoberfläche wird auf dieser eine leitfähige Zinnoxidschicht ausgebildet. Die verwendeten Chemikalien sind vergleichsweise aggressiv. Es kann nicht ausgeschlossen werden, dass Reste dieser Verbindungen später abgegeben, beispielsweise ausgegast oder herausgelöst, werden. Dies ist für viele technische Anwendungen, insbesondere in der Pharmaindustrie, nicht akzeptabel.

EP 0 501 562 E1 offenbart ein kontinuierliches Verfahren zur Herstellung eines innenbeschichteten Glasrohrs nach dem Vello-Verfahren. Bei diesem Verfahren wird in den Schlauch aus erweichtem Glas ein Gas oder ein Gasgemisch eingebracht, das bei der Ziehtemperatur des Glases chemisch nicht reagiert. Das Gas oder Gasgemisch in dem Glasrohr wird vielmehr in einem nachgeordneten Bereich, dort wo sich das Glas auf eine Temperatur unterhalb der Erweichungstemperatur des Glases abgekühlt hat, zu einem Plasma gezündet, aus dem sich dann eine Beschichtung aus SiO₂ auf der Innenoberfläche des erkalteten Glasrohrs abscheidet. Während des Verfahrens wird ein Gasgemisch aus Silizumtetrafluorid, Sauerstoff und Stickstoff eingesetzt. Dieses Verfahren ist auch auf die Herstellung von Glasrohren nach dem bekannten Danner-Verfahren übertragbar.

US 4,717,607 offenbart ein kontinuierliches Verfahren zur Herstellung von Glasrohren mit modifizierter Innenoberfläche, nämlich mit einer gezielten Natriumverarmung der Innenoberfläche. Bei diesem Verfahren wird ein organisches, fluorhaltiges Gas (bevorzugt 1,1-Difluorethan) in den Schlauch aus erweichtem Glas unter Überdruck eingeblasen. In Gegenwart von Sauerstoff wird das Gas gezündet. Das entstehende Fluoridgas reagiert mit Alkali-Ionen auf der heißen Innenoberfläche zu gasförmigen Fluor-Alkali-Verbindungen die nicht auf der Innenoberfläche kondensieren, sondern durch den Überdruck aus dem Rohrinneren ausgeblasen werden. Auch bei diesem Verfahren müssen aggressive Substanzen eingesetzt werden, was aus den vorgenannten Gründen unerwünscht ist.

DE 100 45 923 C2 offenbart ein Verfahren zur Herstellung innenvergüteter Glasrohre, bei dem die Glasschmelze über ein beschichtetes Ziehwerkzeug gezogen wird, das während des Ziehprozesses durch geeignete Diffusions- und Lösungsvorgänge zu einer geeigneten Modifikation der Innenoberfläche des Glasrohrs führt. Die Beschichtung des Ziehwerkzeugs verbraucht sich jedoch im Laufe der Zeit, was zu kosten- und zeitaufwändigen Stillstandszeiten beim Wechsel des Ziehwerkzeugs führt.

DE 198 01 861 A1 offenbart ein Verfahren zur Herstellung eines innenbeschichteten Glasrohrs. Das erkaltete Glasrohr wird in eine Vorrichtung eingespannt und mit einem Gas befüllt, in dem Plasma erzeugt wird, aus dem eine Beschichtung auf der Innenoberfläche des Glasrohrs abgeschieden wird. Dieses Verfahren eignet sich nicht zur kontinuierlichen Herstellung von innenvergüteten Glasrohren. EP 0005 963 B1 offenbart ein vergleichbares Verfahren, bei dem Dämpfe in das Rohr eingeleitet werden und dann ein induktiv angeregtes Hochfrequenzplasma in dem Rohr gezündet und aufrechterhalten wird.

Aus dem Stand der Technik sind auch Verfahren zur Beschichtung von Floatglas bekannt. Aufgrund der grundlegend anderen geometrischen Gegebenheiten und Verfahrensparametern sind die auf diesem anderen technischen Gebiet angewendeten Prinzipien nicht oder jedenfalls nicht ohne Weiteres auf die Innenvergütung von Glasrohren bei einem kontinuierlichen Glasziehverfahren übertragbar, so dass diese dem Fachmann nicht als Anregung zur Verbesserung solcher Verfahren dienen werden.

DE 42 37 921 A1 offenbart ein Verfahren zum Modifizieren der Oberflächenaktivität eines Silikatglassubstrates, bei dem eine siliziumhaltige Beschichtung durch flammenpyrolytische Zersetzung von siliziumorganischen Substanzen als SiOₓ-Beschichtung aufgebracht wird.

US 4,731,256 offenbart ein Verfahren zur Beschichtung eines flächigen Glassubstrates mit einer mit Fluor dotierten Zinnoxidbeschichtung. Die Beschichtung wird mittels eines CVD-Verfahrens abgeschieden.

WO 98/06675 offenbart ein Verfahren zum Abscheiden einer Oxidschicht auf einem Floatglas. Ein Percursor-Gasgemisch, das ein Metalltetrachlorid und organischen Sauerstoff enthält, wird in eine Beschichtungskammer eingebracht, die sich zu dem vorbeilaufenden heißen Floatglas hin öffnet. Das Percusor-Gasgemisch wird an der heißen Glasoberfläche aufgeheizt, was eine CVD-Beschichtung bewirkt.

WO 00/75087 A1 offenbart ein entsprechendes Beschichtungsverfahren.

US-2004/237590 A1 offenbart ein Verfahren zum Beschichten von Flachglas. Dabei werden Aerosole aus nanoskaligen (< 400 nm) Partikeln, beispielsweise SiO₂, Al₂O₃ und ZrO₂, und einem Trägergas auf eine heiße Glasoberfläche zur Vergütung und Bildung einer Metalloxidschicht aufgesprüht. Zwar findet wird auch ein allgemeiner Hinweis auf die Verwendung in einem Verfahren zur Herstellung von Rohrglas offenbart, doch werden weitere Einzelheiten hierzu nicht offenbart.

Weitere Beschichtungsverfahren sind in DE 36 38 426 A1, US-A-5,462,596, DE 38 01 111 A1, GB-A-1 075 759, GB-A-2 131 792 sowie in Morse T.F., et al. ,Aerosol transport for optical fiber core doping: a new technique for glass formation', Journal of Aerosol Science UK, Bd. 22, Nr. 5, 1991, Seiten 657-666 offenbart.

### Zusammenfassung der Erfindung

Aufgabe der vorliegenden Erfindung ist es, ein Verfahren und eine Vorrichtung bereitzustellen, womit sich innenvergütete Glasrohre in einfacher und kostengünstiger Weise herstellen lassen.

Diese Aufgaben werden gelöst durch ein Verfahren mit den Merkmalen nach Anspruch 1 und durch eine Vorrichtung mit den Merkmalen nach Anspruch 8. Weitere vorteilhafte Ausführungsformen sind Gegenstand der rückbezogenen Unteransprüche.

Bei einem Verfahren gemäß der vorliegenden Erfindung wird das Glasrohr durch Ziehen einer Glasschmelze zu einem Schlauch aus erweichtem Glas und durch Heißformgebung zu dem Glasrohr ausgebildet. Dabei kann die Glasschmelze mittels bekannter Ziehverfahren, insbesondere Vello-Verfahren, Danner-Verfahren oder Down-Draw-Verfahren, über einen zentrischen Formkörper gezogen werden, der das Profil des Glasrohrs vorgibt, oder können beliebige andere Glasziehverfahren eingesetzt werden. Beim Ziehen der Glasschmelze entsteht dabei zunächst ein Schlauch aus erweichtem Glas, der in einem weiteren Heißformgebungsprozess zum Glasrohr gezogen wird. Dabei erfolgt die Heißformgebung typischerweise ohne äußere Kraftbeaufschlagung, wenngleich dies gemäß weiteren Ausführungsformen der vorliegenden Erfindung nicht ausgeschlossen ist. Bei dem Verfahren wird ferner in den Schlauch aus erweichtem Glas eine Substanz eingebracht, mittels der die Innenoberfläche vergütet, das heißt physikalisch oder chemisch modifiziert, wird, wie nachfolgend beschrieben.

Erfindungsgemäß zeichnet sich das Verfahren dadurch aus, dass die Substanz als Aerosol eingebracht und die Innenoberfläche mittels der Substanz oder eines Zerfalls- bzw. Reaktionsprodukts während der Heißformgebung vergütet wird, wobei das Aerosol aus einer flüssigen, sauerstoffhaltigen, metallorganischen Verbindung ausgebildet wird, bei der es sich um eine Metall-Acyloxy-Verbindung oder eine Metall-Alkylcarbonyl-Verbindung handelt.

Das Aerosol liegt dabei in der Form feinst verteilter fester Teilchen in einer Flüssigkeit oder einem Gas. Insgesamt wird die Substanz somit mit hohem Oberflächeninhalt eingebracht, was Reaktionen mit der heißen Innenoberfläche während der Heißformgebung, beispielsweise chemische Reaktionen oder eine Abscheidung, wie nachfolgend näher erläutert, begünstigt und beschleunigt. Die Feinstverteilung der flüssigen oder festen Teilchen ermöglicht erfindungsgemäß ferner eine gleichmäßige Vergütung der gesamten Innenoberfläche des Glasrohrs. Ein weiterer Vorteil ist darin zu sehen, dass das erfindungsgemäße Verfahren kontinuierlich bzw. quasi-kontinuierlich ausgeführt werden kann, also das Glasrohr kontinuierlich oder quasi-kontinuierlich abgezogen werden kann.

Je nach Art der eingebrachten Substanz und den jeweiligen Verfahrensparametern können unterschiedliche Prozesse bewirkt werden, die zur gewünschten Innenvergütung des Glasrohrs führen. So kann mittels des Aerosols beispielsweise eine gezielte Verarmung von Ionen an der Innenoberfläche bewirkt werden, insbesondere eine gezielte Natriumverarmung. Oder mit Hilfe des Aerosols kann eine gezielte Innenbeschichtung des Glasrohrs bewirkt werden, beispielsweise zur Erhöhung der hydrolytischen Beständigkeit, wie nachfolgend ausgeführt. Unter Innenvergütung im Sinne der vorliegenden Anmeldung sind somit beliebige geeignete Prozesse zur physikalischen oder chemischen Modifikation der während der Heißformgebung noch heißen Innenoberfläche des Glasrohrs zu verstehen.

Dabei kann die Substanz auch in Form eines Substanzgemisches eingebracht werden, bestehend aus mehreren Substanzen, die aufgrund unterschiedlicher Prozesse zur Innenvergütung des Glasrohrs beitragen.

Gemäß einer weiteren Ausführungsform der vorliegenden Erfindung wird das Aerosol in den Schlauch aus erweichtem Glas mit einem vorbestimmten Überdruck eingebracht. Die dadurch erzielbare vergleichsweise hohe Strömungsgeschwindigkeit des Aerosols ermöglicht beispielsweise, dass die jeweilige Substanz rasch in den Bereich der Heißformgebung eingebracht werden kann, das heißt mit einer Temperatur unterhalb einer kritischen Temperatur, ab der die Substanz sich thermisch zersetzt, reagiert, sich abscheidet oder dergleichen.

Mit dem gewählten Überdruck steht gleichzeitig ein einfach zu steuernder oder zu regelnder Parameter zur Verfügung, der die Menge an in den Heißformgebungsbereich eingebrachten Aerosol beeinflusst. Auf diese Weise kann der Grad der Innenvergütung des Glasrohrs durch Variieren des Überdrucks gesteuert oder geregelt werden. Diese Steuerung kann elektronisch oder von einer Bedienperson vorgenommen werden, beispielsweise auf der Grundlage einer Bestimmung von Parametern der Vergütung, wie beispielsweise Homogenität, Bedeckungsgrad, chemische Zusammensetzung und/oder Dicke. Diese Untersuchung der Vergütung kann grundsätzlich auch an einem bereits erkalteten Glasrohr vorgenommen werden, insbesondere auch an einem Proben-Glasrohr einer Charge. Gemäß einer weiteren Ausführungsform kann die Vergütung auch während eines laufenden Herstellungsverfahrens untersucht werden und als Grundlage für eine kontinuierliche Regelung der Vergütung dienen.

Eine entsprechende Steuerung bzw. Regelung der Vergütung kann selbstverständlich auch durch geeignete Wahl der Konzentration der Substanz in dem Aerosol mittels geeigneter Steuerung oder Regelung einer Dosiervorrichtung zum Dosieren der Substanz erzielt werden.

Gemäß einer weiteren Ausführungsform wird ein Aerosol in einem Prozessgas ausgebildet, das in den Schlauch aus erweichtem Glas eingeblasen wird. Bei diesem Prozessgas kann es sich insbesondere um CO₂, Edelgase oder Mischungen daraus handeln, denen auch Sauerstoff in geeigneter Konzentration beigemischt sein kann. Grundsätzlich kann das Prozessgas jedoch auch einen im Vergleich zur Atmosphäre höheren Sauerstoffgehalt aufweisen, bis hin zu reinem Sauerstoff, was für die weitere Reaktion der Aerosolteilchen in dem Heißformgebungsprozess vorteilhaft sein kann.

Gemäß einer weiteren Ausführungsform wird ein Aerosol durch eine Auslassöffnung am vorderen Ende eines Formkörpers eingebracht, über den die Glasschmelze gezogen wird. Zu diesem Zweck weist der Formkörper zweckmäßig eine axiale Innenbohrung auf, so dass die vorgenannte Auslassöffnung mit einem Einlass für das Aerosol kommunizieren kann. Dieser Einlass kann in einem vergleichsweise kühlen Bereich der Vorrichtung vorgesehen sein, was die Verwendung einfacher Schlauch- oder Leitungsverbindungen zum Zuführen des Aerosols ermöglicht.

Gemäß einer weiteren Ausführungsform weisen die festen oder flüssigen Teilchen in dem Aerosol einen mittleren Teilchendurchmesser von kleiner als etwa 5 µm auf. Der daraus resultierende hohe Oberflächeninhalt des Aerosols beispielsweise ermöglicht einen raschen und vollständigen Aufschluss der Teilchen zur Innenvergütung. Ein noch rascherer und vollständigerer Aufschluss der Teilchen wird erzielt, wenn der mittlere Durchmesser der Aerosolteilchen kleiner als etwa 3 µm ist. Ein noch vollständigerer und rascherer Aufschluss der Teilchen wird für einen mittleren Teilchendurchmesser von kleiner als etwa **1** µm erzielt.

Gemäß einer weiteren Ausführungsform der vorliegenden Erfindung zersetzt sich die eingebrachte Substanz während der Heißformgebung des Glasrohrs thermisch. Auf diese Weise kann in dem Heißformgebungsprozess eine Substanz bereitgestellt werden, die zur Innenvergütung durch physikalische oder chemische Modifikation der Innenoberfläche geeignet ist.

Erfindungsgemäß wird das Aerosol somit aus einer flüssigen, sauerstoffhaltigen, metallorganischen Verbindung ausgebildet. Dabei kann die metallorganische Verbindung ein Metall umfassen, das ausgewählt ist aus Si, Al, Zr und Ti, wobei Si und Al bevorzugt sind und Si besonders bevorzugt ist. Denkbar sind auch Mischungen aus zwei oder mehr Metallverbindungen, umfassend mindestens zwei verschiedene Metalle, wobei Mischungen, die mindestens eine Siliziumorganische Verbindung enthalten, bevorzugt sind. Für geeignete sauerstoffhaltige Reste wird auf die oben genannten verwiesen.

Ein gemäß dem vorgenannten Verfahrens hergestelltes innenvergütetes Glasrohr ist zur Weiterverarbeitung zu einem hohlen innenvergüteten Glasformkörpergeeignet, beispielsweise zu einem innenvergüteten Glasbehälter für pharmazeutische Anwendungen oder zu einem Leuchtmittel, beispielsweise zu einer Fluoreszenzlampe zum Hinterleuchten von LCD-Displays. Selbstverständlich können solchermaßen hergestellte Glasrohre auch für den chemischen Anlagenbau, für Durchflussmesser für chemisch aggressive Medien, für analytische Zwecke (beispielsweise Bürettenrohre, Titrationszylinder etc.), für Reagenzgläser für spezielle Zwecke, für Ummantelungen von Messelektroden in aggressiven Medien, als Entladungslampen, als Komponenten für biotechnologische Reaktoren und als Behälter für medizinische Zwecke (beispielsweise Ampullen, Fläschchen, Spritzenkörper, Zylinderampullen etc.) verwendet werden.

Bevorzugt wird das erfindungsgemäße Verfahren zur Innenvergütung von Glasrohren aus niedrig schmelzenden Gläsern eingesetzt, beispielsweise Borosilicatgläsern oder Kalk-Natron-Gläsem. Diese Rohre lassen sich vorteilhaft wirtschaftlich herstellen und umformen. Beispiele für solche Gläser sind: Duran^{®}-Borosilikatglas (Schott), Fiolax^{®} Klar (Schott), Fiolax^{®} Braun (Schott), Kimbel N51A (Kimbel). Selbstverständlich kann das erfindungsgemäße Verfahren auch bei Glasrohren aus höherschmelzendem Glas angewendet werden, beispielsweise aus Quarzglas.

Ein weiterer Gesichtspunkt der vorliegenden Erfindung betrifft die Bereitstellung einer Vorrichtung zur Herstellung eines innenvergüteten Glasrohrs zur Verwendung bei dem vorgenannten Verfahren. Eine solche Vorrichtung weist einen Formkörper aus, über den die Glasschmelze zu dem Schlauch aus erweichtem Glas gezogen wird, wobei an dem vorderen Ende des Formkörpers eine Auslassöffnung zum Einbringen einer Substanz in den Schlauch aus erweichtem Glas ausgebildet ist. Erfindungsgemäß zeichnet sich die Vorrichtung durch eine Aerosol-Erzeugungseinrichtung zum Erzeugen eines Aerosols, wie vorstehend beschrieben, aus, wobei die Aerosol-Erzeugungseinrichtung mit der Auslassöffnung kommuniziert, so dass die Substanz in den Schlauch aus erweichtem Glas als Aerosol eingebracht werden kann, wobei die Aerosol-Erzeugungseinrichtung das Aerosol aus einer flüssigen, sauerstoffhaltigen, metallorganischen Verbindung aus einer Metall-Acyloxy-Verbindung oder einer Metall-Alkylcarbonyl-Verbindung ausbildet.

### Figurenübersicht

Nachfolgend wird die Erfindung in beispielhafter Weise und unter Bezugnahme auf die beigefügten Zeichnungen näher erläutert werden, woraus sich weitere Merkmale, Vorteile und zu lösende Aufgaben ergeben werden und worin:
- Fig. 1: in einer schematischen Schnittansicht eine Vorrichtung für ein Verfahren gemäß einer ersten Ausführungsform der vorliegenden Erfindung zeigt;
- Fig. 2: in zwei schematischen Schnittansichten eine Vorrichtung zum Ausführen eines Verfahrens gemäß einer zweiten Ausführungsform der vorliegenden Erfindung zeigt; und
- Fig. 3: in einem schematischen Blockdiagramm eine Anordnung zum Erzeugen eines Aerosols gemäß der vorliegenden Erfindung zeigt.

In den Figuren bezeichnen identische Bezugszeichen identische oder im Wesentlichen gleichwirkende Elemente oder Elementgruppen.

### Ausführliche Beschreibung bevorzugter Ausführungsbeispiele

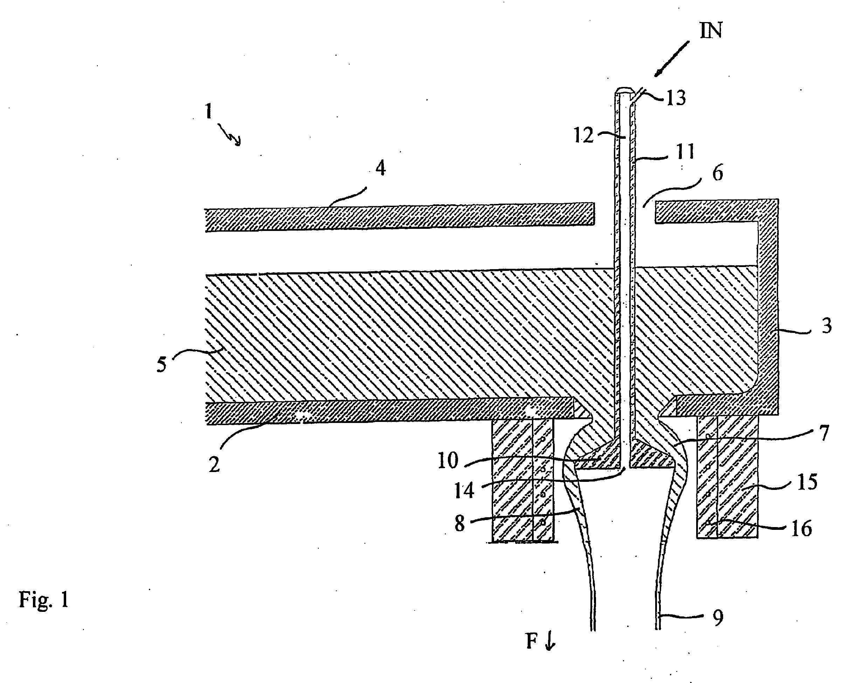

Gemäß der Fig. 1 umfasst die insgesamt mit 1 bezeichnete Ziehvorrichtung eine Schmelzenzuführung, die von einem Boden 2, einer Seitenwand 3 und einer oberen Abdeckung 4 ausgebildet wird, um darin eine geeignet konditionierte Glasschmelze 5 zuzuführen. In dem Boden 2 ist eine von einem Auslaufring begrenzte Austrittsöffnung ausgebildet, aus der die Glasschmelze austritt. Unterhalb der Austrittsöffnung ist ein als Ziehnadel ausgebildeter Formkörper 10 angeordnet, der mit der Austrittsöffnung einen Ringspalt bildet, welcher die austretende Schmelzenmenge steuert. Der Formkopf 10 ist dabei in einer Wärmeisolation 15 angeordnet, auf deren Innenoberfläche eine Heizmuffel 16 vorgesehen ist. Wie durch den Pfeil F angedeutet, wird die austretende Glasschmelze 7 über den Formkörper 10 gezogen. Dabei wird stromabwärts des Formkörpers 10 ein schlauchartiges Gebilde aus erweichtem Glas, auch Ziehzwiebel genannt, ausgebildet. In diesem Heißformgebungsbereich ist das erweichte Glas noch verformbar, liegt also die Temperatur des erweichten Glases oberhalb der Erweichungstemperatur der jeweiligen Glassorte. Gemäß der Fig. 1 geht die Glasschmelze in den Heißformgebungsbereich in eine freie Formgebung zu dem Glasrohr 9 über, das weiter abgezogen wird. Bei diesem Glasziehen nach dem bekannten Vello-Verfahren wird das Innenprofil des Glasrohrs 9 durch das Profil des Formkörpers 10 und die Bedingungen in dem Heißformgebungsbereich vorgegeben und wird die Wandstärke des Glasrohrs 9 insbesondere durch den Ringspalt, die Temperatur der Glasschmelze 5 sowie die Abzugsgeschwindigkeit festgelegt.

Gemäß der Fig. 1 weist der zur Halterung des Formkörpers 10 dienende Schaft 11 eine axiale Innenbohrung 12 auf, die über die Auslassöffnung 14 in den Heißformgebungsbereich im Inneren des Schlauchs 8 aus erweichtem Glas übergeht. Gemäß der Fig. 1 erstreckt sich der Schaft 11 durch die Glasschmelze 5 und eine Öffnung 6 in der oberen Abdeckung 4 hindurch, wenngleich auch andere Anordnungen vorgesehen sein können. Der Formkörper 10 und der Schaft 11 sind aus einem geeigneten Feuerfest-Material ausgebildet, das mit einem temperaturbeständigen und geeignet reaktionsträgen Metall verkleidet sein kann, beispielsweise mit Platin oder einer Platin-Legierung. Gemäß der Fig. 1 ist an dem oberen Ende des Schafts 11 ein Einlass 13 ausgebildet, durch den Prozessgas über die axiale Innenbohrung 12 in den Heißformgebungsbereich eingeblasen werden kann. Erfindungsgemäß wird durch den Einlass 13 ferner ein geeignetes Aerosol in den Heißformgebungsbereich eingebracht, um dort eine Innenvergütung des Schlauchs 8 aus erweichtem Glas bzw. des Innenrohrs 9 zu bewirken, wie nachfolgend ausgeführt.

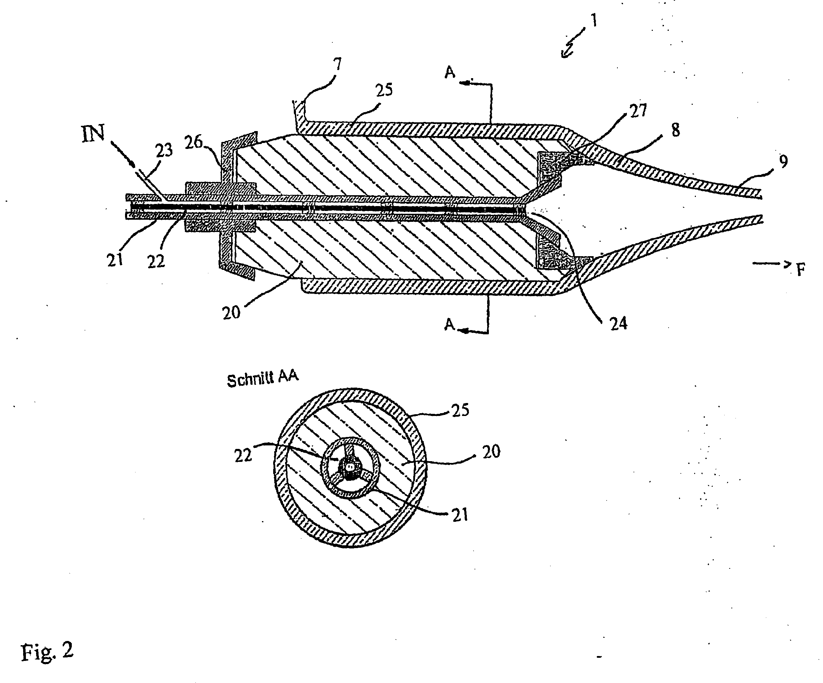

Die Fig. 2 zeigt eine Vorrichtung zum Ziehen eines innenvergüteten Glasrohrs nach dem Danner-Verfahren gemäß der vorliegenden Erfindung. Gemäß der Fig. 2 gelangt die austretende Glasschmelze 7 auf die Außenumfangsoberfläche eines sich drehenden Zylinders 20 aus einem Feuerfest-Material, der mit einem Metall überzogen sein kann, wie vorstehend ausgeführt. Durch Drehen des Zylinders 20 bildet sich auf dem Außenumfang des Zylinders 20 ein zylindrischer Mantel 25 aus der Glasschmelze mit gleichmäßiger Dicke aus, der, wie durch den Pfeil F angedeutet, in der Fig. 2 nach rechts abgezogen wird. Somit bildet sich in der vorstehend beschriebenen Weise an dem vorderen Ende des Zylinders 20 ein Schlauch 8 aus erwärmtem Glas aus, der durch Heißformgebung weiter in das Glasrohr 9 übergeht. Gemäß der Fig. 2 liegt das hintere Lager 26 und das vordere Lager 27 auf der konzentrischen Antriebswelle 21 auf, welche eine axiale Innenbohrung 22 aufweist, die über den Auslass 24 in den Heißformgebungsbereich mündet. Gemäß der Fig. 2 weist die Innenbohrung 22 an einem vergleichsweise kühlen Abschnitt der Antriebswelle 21 einen Einlass 23 zum Eintritt von Prozessgas und Aerosol auf, die in den Heißformgebungsbereich eingeblasen werden.

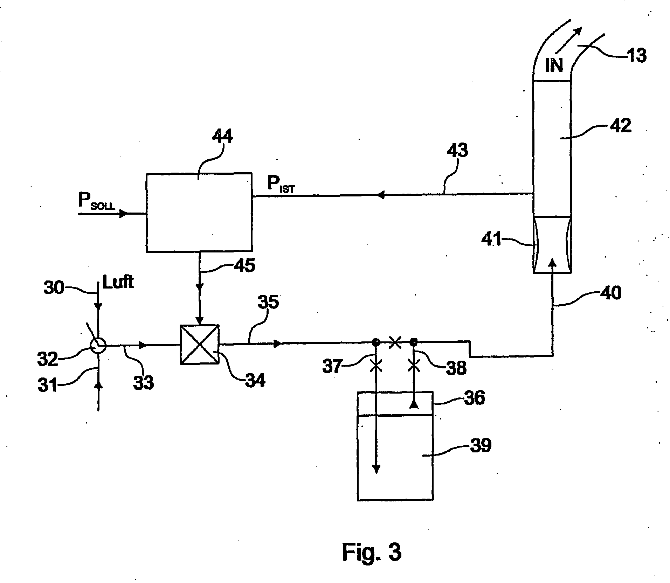

Die Fig. 3 zeigt einen Abschnitt zum Erzeugen eines Aerosols gemäß der vorliegenden Erfindung. Gemäß der Fig. 3 wird mit Hilfe des Mischventils 32 Umgebungsluft aus der Luftleitung 30 und/oder Prozessgas aus der Prozessgasleitung 31, beispielsweise Stickstoff, CO₂, Edelgas, gegebenenfalls unter Beimischung von Sauerstoff, in die Leitung 33 eingelassen, wobei der Druck bzw. die Durchflussrate in der Leitung 35 mit Hilfe des Stellventils 34 eingestellt wird. Zum Steuern bzw. Regeln des Drucks dient die Drucksteuerungs- oder Druckregelungseinrichtung 44, welche das Stellventil 34 über die Signalleitung 45 steuert. Gemäß der Fig. 3 wird ein Teil des Gases in der Leitung 35 über die Leitung 37 in einen Behälter 36 eingelassen, der eine Substanz zur Innenvergütung des Glasrohrs aufbewahrt. Diese Substanz kann ein feinst gemahlenes Pulver oder eine Flüssigkeit sein. Zum weiteren Konditionieren der Flüssigkeit kann der Behälter 36 geeignet geheizt werden, um den Dampfdruck und die Temperatur der Flüssigkeit 39 einzustellen. Über die Leitung 38 wird die flüssige oder pulverförmige Substanz weiter in die Leitung 40 geleitet, die schließlich in einen Injektor bzw. eine Einspritzvorrichtung 41 zum Erzeugen eines Aerosols übergeht. Das Aerosol wird über die Leitung 42 in den Einlass der vorgenannten Ziehvorrichtung eingebracht. Der tatsächliche Druck in der Verbindungsleitung 42 kann gemessen und über die Signalleitung 43 an die Drucksteuerungs- bzw. Druckregelungseinrichtung 44 übermittelt werden. Insgesamt wird auf diese Weise ein Aerosol durch Dispersion von flüssigen oder festen Teilchen in einem Prozessgas oder einem anderen geeigneten Gas ausgebildet, das über die axiale Innenbohrung des Formkörpers der Ziehvorrichtung in den Heißformgebungsbereich eingebracht bzw. eingeblasen wird. Die Parameter der Einspritzvorrichtung 41 können dabei so gewählt werden, dass die Teilchen des Aerosols einen mittleren Teilchendurchmesser von kleiner als etwa 5 µm, bevorzugter kleiner als etwa 3 µm und noch bevorzugter von kleiner als etwa 1 *µ*m aufweisen. Das Aerosol wird mit einer Temperatur unterhalb von etwa 200°C in den Heißformgebungsbereich eingebracht, das heißt unterhalb einer Temperatur, bei der sich der Reaktivstoff des Aerosols thermisch zersetzt. Die Reaktion und/oder Abscheidung des Reaktivstoffes zur Innenvergütung gelangt somit vornehmlich im Bereich des Schlauchs 8 aus erweichtem Glas in Kontakt mit der heißen Glasoberfläche.

### Ausführungsbeispiel 1 (außerhalb der Erfindung Liegend)

Bei diesem Ausführungsbeispiel wird ein Glasrohr aus Fiolax innenbeschichtet. Das Rohr wurde mit einer Ziehgeschwindigkeit von 0,733 Meter pro Sekunde und einem Durchsatz von 670 Kilogramm pro Stunde auf einen Außendurchmesser von 30,0 mm und eine Wandstärke von 1,20 mm gezogen. Die Trennlänge der Glasrohre betrug 158 cm. Die hydrolytische Beständigkeit wurde mit Hilfe eines Tests nach RS-TA 2010, wie nachfolgend beschrieben, ermittelt. Weiterhin wurde die Innenbeschichtung der Glasrohre mittels SIMS-Analyse (Sekundärionenmassenspektroskopie) bis in eine Tiefe von etwa 160 nm überprüft.

Es zeigten sich dabei keine wesentlichen Veränderungen der Glaszusammensetzung. Die erzielten Schichtdicken betrugen 50 bis 100 nm.

Das Aerosol wurde aus feinst gemahlenem bzw. mit nanoskaligen Pulvern aus metallorganischen Verbindungen oder Metalloxiden gebildet. Als Metalle konnten alle Metalle mit Ausnahme der Alkali-Metalle eingesetzt werden. Bei den metallorganischen Verbindungen handelt es sich insbesondere um Citrate, Tartrate und Laktate. Bei den Metalloxiden, die untersucht wurden, handelt es sich um SiO₂, Al₂O₃, ZrO₂ und TiO₂. Die nachfolgende Tabelle listet die erzielten Ergebnisse für verschiedene verwendete Pulver auf. Es ergaben sich Verbesserungen der hydrolytischen Beständigkeit des Glases beim Test RS-TA 2010, wie nachfolgend beschrieben, um bis zu 20%.

| **Pulver** | **Blasmedium** | **Pulververbrauch/g** | **Bemerkung** | **Chargen #** | **Mwert Na2O-Abgabe mg/l** |
|---|---|---|---|---|---|
| | Luft | | Umstellung auf Rohrgeometrie und Einbau der Dosieranlage; Ermittlung eines Referenzwertes | 0 | 0,32 |
| Al-Aceto-Tartrat | Luft | 49 | Wechsel Blasmedium | 5 | 0,28 |
| Al-Lactat | Luft | | | 7 | |
| Al-Lactat | N2 | 20 | Wechsel Blasmedium | 8 | 0,27 |
| Aerosil Si02 | N2 | | | 10 | 0,25 |
| Aerosil Si02 | Luft | 16 | Wechsel Blasmedium | 11 | 0,28 |

Nachfolgend wird die Vorgehensweise der vorstehend erwähnten RS-TA-2010 Prüfanweisung zur Ermittlung der hydrolytischen Beständigkeit, insbesondere der Na₂O-Abgabe an Wasser, der Innenvergütung von Glasrohren ausführlicher erläutert werden:

Diese Vorgehensweise beruht auf einer DIN 52 329 Prüfanweisung. Es handelt sich um ein Autoklavenverfahren zur Bestimmung der Wasserbeständigkeit der Innenoberfläche von Glasgefäßen (vgl. DIN 52 329, DIN 52 339-2, ISO 4502-2, DAB, Ph.Eur.) Verwendet wird ein Hochdruckdampfautoklav für einen Druck von 2,5 x 10⁵ N/m², der es gestattet, die Prüfbedingungen von 121 ± 1 °C einzuhalten. Verwendet werden ferner eine Gebläselampe Typ Arnold (Tischbrenner) mit zusätzlichem Sauerstoffanschluss, ein Dispenser oder Bürette zum Befüllen der Behältnisse, Aluminiumfolie zum Abdecken der zu prüfenden Rohre im Autoklaven, eine Atomabsorptionsspektrometer (FAAS) oder Atomemissionsspektrometer (FAES)

Als Reagentien werden verwendet: als Waschwasser einfach destilliertes oder entionisiertes Wasser; als Füllwasser doppelt destilliertes Wasser, das durch Auskochen in Gefäßen aus Glas der Beständigkeitsklasse ISO 719 - HGB 1 weitgehend von Kohlendioxid und gelösten Gasen befreit worden ist. Das Wasser muss bei Prüfung unmittelbar vor Gebrauch neutral gegenüber Methylrot sein, d.h. es muss eine orangerote (keine violette oder gelbe) Färbung hervorrufen, die einem pH-Wert von 5,5 ± 0,1 entspricht, wenn 2 Tropfen der Methylrot-Indikatorlösung zu 25 ml des Wassers hinzugefügt werden, als Methylrot-Indikatorlösung 25 mg des Natriumsalzes von Methylrot, das in 100 ml doppelt destilliertem Wasser gelöst ist; als Na₂O-Stammlösung 1000 mg Na₂O/l (entspricht 1 mg Na₂O/ml), die aus bei 110 °C über 2 h getrocknetem Natriumchlorid und Füllwasser hergestellt wurde; als Na₂O-Standardlösungen Eichlösungen für Spektrometer, hergestellt aus der Stammlösung und Füllwasser mit folgenden Konzentrationen: 0,5 - 1,0 - 1,5 - 2,0 - 2,5 - 3,0 - 4,0 - 5,0 mg Na₂O/l. Als K₂O-Stammlösung 1000 mg K₂O/l (entspricht 1 mg K₂O/ml), die aus bei 110 °C über 2 h getrocknetem Kaliumchlorid und Füllwasser hergestellt wurde; als K₂O-Standardlösungen werden Kalibrieflösungen für Spektrometer verwendet, hergestellt aus der Stammlösung und Füllwasser mit folgenden Konzentrationen: 0,5 - 1,0 - 1,5 - 2,0 - 2,5 - 3,0 - 4,0 - 5,0 mg K₂O/l.

Probenvorbereitung: Die Prüfung wird an jeweils vier Röhren durchgeführt.
a) Bei beidseitig geschlossenen Röhren wird ein 360 mm langer Abschnitt von dem Ende abgetrennt, das keine Druckausgleichsöffnung enthält. Das Rohrende wird nochmals im Abstand von 120 mm zum Boden abgeschnitten. Die Rohrabschnitte mit den Böden werden verworfen.
b) Bei beidseitig offenen Röhren wird ebenfalls ein 360 mm langer Abschnitt abgetrennt, das Rohrende im Abstand von 120 mm abgeschnitten und verworfen.

Die 240 mm langen Abschnitte werden in der Mitte bis zum zähplastischen Zustand unter Drehen mit der Gebläselampe bzw. dem Tischbrenner erwärmt und auseinander gezogen. Die dabei entstehenden acht Stück, je 120 mm langen Teilstücke werden an dem Ende mit der Kapillare bis zur Tropfenbildung unter Drehen erwärmt. Der Tropfen selbst wird mit heißem Glas vorsichtig abgezogen. Der Reagenzglasboden wird unter kurzem Aufblasen mit dem Mund rundgeschmolzen.

Der Test wurde wie folgt durchgeführt.

Spülen und Füllen der Behältnisse: Die Behältnisse werden mit Waschwasser zweimal gründlich gespült und unmittelbar vor der Füllung zum Autoklavieren einmal mit Füllwasser gespült. Nach dem Spülen werden die Behältnisse mit denn in Tabelle 1 ermittelten Füllvolumen mit Füllwasser (entspricht ca. 20 mm unterhalb der Öffnung) gefüllt und mit Aluminiumfolie abgedeckt.

**Tabelle 1: Bestimmung des Füllvolumens und Grenzwerte für NaO2-Abgabe**

| Innendurchmesser in mm | Füllvolumen in ml | Grenzwerte in NaO₂/l | | Innendurch messer in mm | Füllvolume n in ml | Grenzwert in mg NaO₂/l | | Innendurch messer in mm | Füllvolumen in ml | Grenzwert in mg NaO₂/l |
|---|---|---|---|---|---|---|---|---|---|---|
| | | | | | | | | | | |
| 5,3 | 2,0 | 1,10 | | 13,0 | 12,0 | 0,50 | | 26,1 | 48,0 | 0,40 |
| 5,6 | 2,2 | 1,00 | | 13,6 | 13,0 | 0,50 | | 26,6 | 50,0 | 0,40 |
| 5,8 | 2,4 | 1,00 | | 14,1 | 14,0 | 0,50 | | 27,1 | 52,0 | 0,30 |
| 6,1 | 2,6 | 1,00 | | 14,6 | 15,0 | 0,50 | | 27,6 | 54,0 | 0,30 |
| 6,3 | 2,8 | 1,00 | | 15,0 | 16,0 | 0,50 | | 28,1 | 56,0. | 0,30 |
| 6,5 | 3,0 | 1,00 | | 15,5 | 17,0 | 0,50 | | 28,6 | 58,0 | 0,30 |
| 6,7 | 3,2 | 0,80 | | 16,0 | 18,0 | 0,50 | | 29,1 | 60,0 | 0,30 |
| 6,9 | 3,4 | 0,80 | | 16,4 | 19,0 | 0,50 | | 30,1 | 64,0 | 0,30 |
| 7,1 | 3,6 | 0,80 | | 16,8 | 20,0 | 0,50 | | 31,0 | 68,0 | 0,30 |
| 7,3 | 3,8 | 0,80 | | 17,6 | 22,0 | 0,40 | | 31,9 | 72,0 | 0,30 |
| 7,5 | 4,0 | 0,8D | | 18,4 | 24,0 | 0,40 | | 32,8 | 76,0 | 0,30 |
| 7,7 | 4,2 | 0,80 | | 19,2 | 26,0 | 0,40 | | 33,6 | 80,0 | 0,30 |
| 7,9 | 4,4 | 0,80 | | 19,9 | 28,0 | 0,40 | | 34,5 | 84,0 | 0,30 |
| 8,1 | 4,6 | 0,80 | | 20,6 | 30,0 | 0,46 | | 35,3 | 68,0 | 0,30 |
| 8,2 | 4,8 | 0,80 | | 21,3 | 32,0 | 0,40 | | 36,1 | 92,0 | 0,30 |
| 8,4 | 5,0 | 0,80 | | 21,9 | 34,0 | 0,40 | | 36,9 | 96,0 | 0,30 |
| 9,2 | 6,0 | 0,65 | | 22,6 | 36,0 | 0,40 | | 37,6 | 100 | 0,30 |
| 10,0 | 7,0 | 0,65 | | 23,2 | 38,0 | 0,40 | | 39,4 | 110 | 0,25 |
| 10,6 | 8,0 0,65 | | | 23,8 | 40,0 | 0,40 | | 41,2 | 120 | 0,25 |
| 11,3 | 9,0 | 0,65 | | 24,4 | 42,0 | 0,40 | | 42,9 | 130 | 0,25 |
| 11,9 | 10,0 | 0,65 | | 24,9 | 44,0 | 0,40 | | 44,5 | 140 | 0,25 |
| 12,5 | 11,0 | 0,50 | | 25,5 | 46,0 | 0,40 | | 46,1 | 150 | 0,25 |

Autoklavenerhitzung: Die vorbereiteten und gefüllten Behältnisse werden auf dem vorgesehenen Gestell in den mit der notwendigen Menge destilliertem Wasser gefüllten Autoklaven eingebracht. Nach Verschließen des Autoklaven wird zunächst bei geöffnetem Entlüftungsventil erhitzt, bis ein lebhafter Dampfstrom abbläst. Diese Dampfströmung wird 10 Minuten lang fortgesetzt, dann das Ventil geschlossen und die Temperatur mit 1°C/min. bis 121°C gesteigert. Dieser Zustand wird 30 ± 1 Minuten lang mit ± 1°C aufrechterhalten. Nach Ablauf dieser Prüfdauer wird mit 1°C/min. auf 100°C abgekühlt.

Nach Belüften werden die Proben heiß aus dem Autoklaven entnommen und innerhalb von 30 Minuten auf Raumtemperatur abgekühlt.

Flammenphotometrische Bestimmung: Der Inhalt der einzelnen erkalteten Behältnisse wird direkt, d.h. ohne Umfüllung oder Vereinigung, in die Flamme des FAAS oder FAES gesprüht. Die Konzentrationen von Na₂O und K₂O werden anhand der zuvor aufgenommenen Na₂O- und K₂O-Kalibrierkurven ermittelt. Es ist zu beachten, dass die Messreihenfolge eingehalten wird, sodass bei jedem Behältnis zum gemessenen Na₂O-Wert der entsprechende K₂O-Gehalt dokumentiert werden kann.

Bei Messwerten < 0,10 mg K₂O/l können diese Ergebnisse in der Auswertung vernachlässigt werden.

Auswertung: Die Messwerte von Rohr und Böden werden getrennt ausgewertet, der jeweilige Mittelwert gebildet und im entsprechenden Prüfbericht eingetragen. Für eine Freigabe ist die Unterschreitung des Messwertes der Rohre im Vergleich zum in Tabelle 1 angegebenen Grenzwert entscheidend.

Bei einem Überschreiten des Grenzwertes wird die Prüfung der Rohre ggf. zu einem späteren Zeitpunkt wiederholt.

Grenzwerte: Die in der vorgenannten Arbeitsanweisung verwendeten Grenzwerte entsprechen in etwa der Konzentration der Grenzwerte der DIN 52339-2 und ISO 4802-2 für Gläser der Wasserbeständigkeitsklasse ISO 719 HGB 1.

### Bezugszeichenliste

- 1: Ziehvorrichtung
- 2: Boden
- 3: Seitenwand
- 4: Obere Abdeckung
- 5: Glasschmelze
- 6: Öffnung
- 7: Austretende Glasschmelze
- 8: Ziehzwiebel / Schlauch aus erweichtem Glas
- 9: Glasrohr
- 10: Formkörper / Ziehnadel
- 11: Schaft
- 12: Axiale Innenbohrung
- 13: Einlass
- 14: Auslass
- 15: Wärmeisolation
- 16: Heizmuffel
- 20: Formkörper / Zylinder
- 21: Antriebswelle
- 22: Axiale Innenbohrung
- 23: Einlass
- 24: Auslass
- 25: Glasschmelze
- 26: Hinteres Lager
- 27: Vorderes Lager
- 30: Luftleitung
- 31: Prozessgasleitung
- 32: Mischventil
- 33: Leitung
- 34: Stellventil
- 35: Leitung
- 36: Behälter
- 37: Einlassleitung
- 38: Auslassleitung
- 39: Pulver / Flüssigkeit
- 40: Leitung
- 41: Injektor
- 42: Verbindungsleitung
- 43: Signalleitung Ist-Druck
- 44: Drucksteuerungs- oder Druckregelungseinrichtung
- 45: Signalleitung

## Patentansprüche

1. Verfahren zur Herstellung eines Glasrohrs mit einer vergüteten Innenoberfläche durch Ziehen einer Glasschmelze (5) zu einem Schlauch (8) aus erweichtem Glas und Heißformgebung zu dem Glasrohr (9), bei welchem Verfahren in den Schlauch (8) aus erweichtem Glas eine Substanz eingebracht wird, **dadurch gekennzeichnet, dass** die Substanz als Aerosol eingebracht wird und die Innenoberfläche mittels der Substanz oder eines Zerfalls- bzw. Reaktionsprodukts während der Heißformgebung vergütet wird, bei der der Schlauch aus erweichtem Glas (8) zu dem Glasrohr gezogen wird, wobei
das Aerosol aus einer flüssigen, sauerstoffhaltigen, metallorganischen Verbindung ausgebildet wird und
die metallorganische Verbindung eine Metall-Acyloxy-Verbindung oder eine Metall-Alkylcarbonyl-Verbindung ist.

2. Verfahren nach Anspruch 1, wobei das Aerosol in den Schlauch (8) aus erweichtem Glas mit einem vorbestimmten Überdruck eingebracht wird, der zum Beeinflussen der Vergütung der Innenoberfläche des Glasrohrs (9) gesteuert oder geregelt werden kann.

3. Verfahren nach einem der vorhergehenden Ansprüche, wobei das Aerosol durch Dispersion von flüssigen oder festen Teilchen in einem Prozessgas ausgebildet wird, das in den Schlauch (8) aus erweichtem Glas eingeblasen wird.

4. Verfahren nach dem vorhergehenden Anspruch, wobei die Teilchen einen mittleren Durchmesser von kleiner als 5 *µ*m, bevorzugter kleiner als 3 µm und noch bevorzugter kleiner als 1 µm aufweisen.

5. Verfahren nach einem der vorhergehenden Ansprüche, wobei sich die Substanz während der Heißformgebung des Glasrohrs (9) thermisch zersetzt.

6. Verfahren nach einem der vorhergehenden Ansprüche, wobei das Metall Si, Al, Zr oder Ti ist.

7. Verfahren nach einem der vorhergehenden Ansprüche, wobei die hydrolytische Beständigkeit der vergüteten Innenoberfläche bzw. Abgabe der vergüteten Innenoberfläche von Natriumionen an Wasser im Vergleich zu einer unbehandelten Innenoberfläche um zumindest 10%, bevorzugter um zumindest 15% und noch bevorzugter um zumindest 20% verbessert bzw. reduziert ist.

8. Vorrichtung zur Herstellung eines Glasrohrs mit einer vergüteten Innenoberfläche durch Ziehen einer Glasschmelze (5) zu einem Schlauch (8) aus erweichtem Glas und Heißformgebung zu dem Glasrohr (9) gemäß dem Verfahren nach einem der Ansprüche 1 bis 7, mit
einem Formkörper (10, 20), über den die Glasschmelze (5, 7) zu dem Schlauch (8) aus erweichtem Glas gezogen wird, wobei
an dem vorderen Ende des Formkörpers (10, 20) eine Auslassöffnung (14, 24) zum Einbringen einer Substanz in den Schlauch (8) aus erweichtem Glas ausgebildet ist,
**gekennzeichnet durch** eine Aerosol-Erzeugungseinrichtung (41) zum Erzeugen eines Aerosols, das die Substanz umfasst, wobei die Aerosol-Erzeugungseinrichtung (41) mit der Auslassöffnung (14, 24) kommuniziert, sodass die Substanz in den Schlauch (8) aus erweichtem Glas als Aerosol einbringbar ist, um die Vergütung der Innenoberfläche mittels der Substanz während der Heißformgebung bewirkt wird, bei der der Schlauch aus erweichtem Glas (8) zu dem Glasrohr gezogen wird, wobei
die Aerosol-Erzeugungseinrichtung (41) das Aerosol aus einer flüssigen, sauerstoffhaltigen, metallorganischen Verbindung aus einer Metall-Acyloxy-Verbindung oder einer Metall-Alkylcarbonyl-Verbindung ausbildet.

9. Vorrichtung nach Anspruch 8, wobei das Aerosol über eine axiale Innenbohrung (12, 22) des Formkörpers (10, 20) zu der Auslassöffnung geleitet wird.

10. Vorrichtung nach einem der Ansprüche 8 oder 9, weiterhin umfassend eine Drucksteuer- oder Druckregeleinrichtung (44), um das Aerosol in den Schlauch (8) aus erweichtem Glas mit einem vorbestimmten Überdruck einzubringen, der zum Beeinflussen der Vergütung der Innenoberfläche des Glasrohrs (9) steuerbar oder regelbar ist.

11. Vorrichtung nach Anspruch 10, wobei der Druck so steuerbar oder regelbar ist, dass das Aerosol an der Auslassöffnung (14, 24) mit einer Temperatur unterhalb einer Temperatur in den Schlauch (8) aus erweichtem Glas einbringbar ist, bei der sich die Substanz thermisch zersetzt.

## Claims

1. A method for manufacturing a glass tube having a coated inner surface by means of drawing a glass melt (5) to a bag (8) of softened glass and hot forming said bag of softened glass to said glass tube (9), in which method a substance is introduced into the bag (8) of softened glass, **characterized in that** the substance is introduced as an aerosol and the inner surface is coated by means of the substance or by means of a decomposition or reaction product during the hot forming, where the bag of softened glass (8) is drawn to said glass tube, wherein
the aerosol is formed from a liquid, oxygen-containing, organometallic compound and
the organometallic compound is a metal acyloxy compound or a metal alkylcarbonyl compound.

2. The method according to claim 1, wherein the aerosol is introduced into the bag (8) of softened glass at a predetermined excess pressure, which can be controlled or regulated for affecting the coating of the inner surface of the glass tube (9).

3. The method according to any of the preceding claims, wherein the aerosol is formed by dispersion of liquid or solid particles in a process gas which is blown into the bag (8) of softened glass.

4. The method according to the preceding claim, wherein the particles have a mean diameter of less than 5 µm, preferably less than 3 µm and most preferably less than I µm.

5. The method according to any of the preceding claims, wherein the substance undergoes thermal decomposition during hot forming of the glass tube (9).

6. The method according to any of the preceding claims, wherein the metal is Si, Al, Zr or Ti.

7. The method according to any of the preceding claims, wherein the hydrolytic resistance of the coated inner surface or the release from the coated inner surface of sodium ions to water is improved or reduced, compared with an untreated inner surface, by at least 10%, preferably by at least 15%, and still more preferably by at least 20%.

8. An apparatus for manufacturing a glass tube having a coated internal surface by drawing a glass melt (5) to a bag (8) of softened glass and hot forming to a glass tube (9) according to a method as claimed in any of claim 1 to 7, comprising:
a forming body (10, 20), over which the glass melt (5, 7) is drawn to the bag (8) of softened glass,
an outlet opening (14, 24) being formed at the front end of the forming body (10, 20) for introducing a substance into the bag (8) of softened glass,
**characterized by** an aerosol generating device (41) for generating an aerosol which comprises the substance, said aerosol generating device (41) communicating with the outlet opening (14, 24), so that the substance can be introduced into the bag (8) made of softened glass as an aerosol, in order to effect the coating of the inner surface by means of the substance during the hot forming, wherein the aerosol generating device (41) forms said aerosol from a liquid, oxygen-containing, organometallic compound of a metal acyloxy compound or a metal alkylcarbonyl compound.

9. The apparatus according to claim 8, wherein the aerosol is fed via an axial inner bore (12, 22) of the forming body (10, 20) to the outlet opening.

10. The apparatus according to claim 8 or 9, further comprising a pressure controlling or regulating means (44) in order to introduce the aerosol into the bag (8) of softened glass at a predetermined excess pressure, which is controllable or regulable to influence the coating of the inner surface of the glass tube (9).

11. The apparatus according to claim 10, wherein the pressure is controllable or regulable such that the aerosol can be introduced at the outlet opening (14, 24) into the bag (8) of softened glass at a temperature below a temperature at which the substance undergoes thermal decomposition.

## Revendications

1. Procédé pour fabriquer un tube de verre avec une surface intérieure traitée par l'étirage d'une masse fondue de verre (5) pour former un flexible (8) à base de verre ramolli et par formage à chaud pour obtenir le tube de verre (9), procédé dans lequel une substance est introduite dans le flexible (8) à base de verre ramolli, **caractérisé en ce que** la substance est introduite sous forme d'aérosol et la surface intérieure est traitée au moyen de la substance ou d'un produit de décomposition ou de réaction pendant le formage à chaud, lors duquel le flexible (8) à base de verre ramolli est étiré pour former le tube de verre,
l'aérosol étant formé à partir d'une liaison liquide, oxygénée et organométallique et
la liaison organométallique étant une liaison métal-acyloxy ou une liaison métal-alkylcarbonyle.

2. Procédé selon la revendication 1, l'aérosol étant introduit dans le flexible (8) à base de verre ramolli avec une surpression prédéfinie, qui peut être commandée ou réglée pour influencer le traitement de la surface intérieure du tube de verre (9).

3. Procédé selon l'une quelconque des revendications précédentes, l'aérosol étant réalisé par dispersion de particules liquides ou solides dans un gaz de processus, lequel est insuflé dans le flexible (8) à base de verre ramolli.

4. Procédé selon la revendication précédente, les particules présentant un diamètre moyen inférieur à 5 µm, de préférence inférieur à 3 µm et avec une préférence encore plus grande pour un diamètre moyen inférieur à 1 µm.

5. Procédé selon l'une quelconque des revendications précédentes, la substance se décomposant thermiquement pendant le formage à chaud du tube de verre (9).

6. Procédé selon l'une quelconque des revendications précédentes, le métal étant du Si, Al, Zr ou Ti.

7. Procédé selon l'une quelconque des revendications précédentes, la stabilité hydrolytique de la surface intérieure traitée ou le dégagement d'ions de sodium de la surface intérieure traitée dans l'eau étant amélioré(e) ou réduit(e) d'au moins 10 %, avec une préférence plus grande d'au moins 15 % et avec une préférence encore plus grande d'au moins 20 % par rapport à une surface intérieure non traitée.

8. Dispositif pour fabriquer un tube de verre avec une surface intérieure traitée par l'étirage d'une masse fondue de verre (5) pour former un flexible (8) à base de verre ramolli et par formage à chaud pour obtenir le tube de verre (9) conformément au procédé selon l'une quelconque des revendications 1 à 7, comprenant
un corps moulé (10, 20) par lequel la masse fondue de verre (5, 7) est étirée pour former le flexible (8) à base de verre ramolli,
une ouverture de sortie (14, 24) étant formée sur l'extrémité avant du corps moulé (10, 20) pour l'introduction d'une substance dans le flexible (8) à base de verre ramolli,
**caractérisé par** un dispositif de production d'aérosol (41) pour la production d'un aérosol qui comporte la substance, le dispositif de production d'aérosol (41) communiquant avec l'ouverture de sortie (14, 24), de telle sorte que la substance peut être introduite dans le flexible (8) en verre ramolli sous forme d'aérosol, afin d'obtenir le traitement de la surface intérieure au moyen de la substance pendant le formage à chaud, lors duquel le flexible à base de verre (8) ramolli est étiré pour former le tube de verre,
le dispositif de production d'aérosol (41) formant l'aérosol à partir d'une liaison liquide, oxygénée, organométallique à base d'une liaison métal-acyloxy ou d'une liaison métal-alkylcarbonyle.

9. Dispositif selon la revendication 8, l'aérosol étant dirigé au moyen d'un perçage intérieure (12, 22) axial du corps moulé (10, 20) vers l'ouverture de sortie.

10. Dispositif selon l'une quelconque des revendications 8 ou 9, comportant également un dispositif de commande ou de réglage de pression (44), pour introduire l'aérosol dans le flexible (8) à base de verre ramolli avec une surpression prédéfinie qui peut être commandée ou réglée pour influencer le traitement de la surface intérieure du tube de verre (9).

11. Dispositif selon la revendication 10, la pression pouvant être commandée ou réglée de telle sorte que l'aérosol peut être introduit sur l'ouverture de sortie (14, 24) avec une température inférieure à une température dans le flexible (8) à base de verre ramolli, à laquelle la substance se décompose thermiquement.
